# EUROPÄISCHE PATENTANMELDUNG

(11) **EP 4 379 629 A1**
(43) Veröffentlichungstag der Anmeldung: **05.06.2024**
(21) Anmeldenummer: 22211175.9
(22) Anmeldetag: 02.12.2022
(51) Int. Cl.: G06Q 10/10

(54) **METHODE ZUR AUSWAHL EINES GEEIGNETEN BAUPRODUKTS UND RECHNER**

(71) Anmelder: Hilti Aktiengesellschaft, 9494 Schaan (LI)
(72) Erfinder: Voss, Brendan, 80798 München (DE); Siu Da Silva, Mitsiu Jose, 9008 St. Gallen (CH)
(74) Vertreter: Hilti Aktiengesellschaft Corporate Intellectual Property

(57) **Zusammenfassung**

Die Erfindung betrifft eine Methode (1000), um ein Bauprodukt zur Verwendung an einem Gebäudeelement (1022) auszuwählen. Sie umfasst mindestens die Operationen (1010, 1020, 1030, 1040, 1050, 1060) Aufnehmen von Bilddaten des Gebäudeelements (1022), Ermitteln wenigstens eines Eigenschaftswertes (1028) einer Eigenschaft des Gebäudeelements (1022) durch Verarbeiten der Bilddaten mit Hilfe einer Bildverarbeitungseinheit (36) und Auswahl eines Bauprodukts aus einem Satz von Bauprodukten, wobei das Bauprodukt konform zu dem ermittelten Eigenschaftswert (1028) der Eigenschaft des Gebäudeelements (1022) ist. Die Erfindung betrifft des Weiteren einen tragbaren Rechner (10). Durch die Erfindung kann die Sicherheit von Gebäuden verbessert werden.

## Beschreibung

### Beschreibung

Die Erfindung betrifft eine Auswahl eines geeigneten Bauprodukts. Insbesondere betrifft die Erfindung eine Methode zur Auswahl eines Bauprodukts zur Verwendung an einem Gebäudeelement.

Um Gebäude sicher zu gestalten, unterliegen in Gebäuden verwendbare Bauprodukte häufig strengen Zulassungs- und Verwendungsvorschriften. Innerhalb einer Klasse von Bauprodukten können dabei in der Regel nur einzelne Bauprodukte eingesetzt werden, die die aus diesen Vorschriften und sonstigen technischen Gegebenheiten ergebenden technischen Anforderungen erfüllen. Die technischen Anforderungen hängen zumindest teilweise von Eigenschaften des Gebäudeelements ab, an dem das jeweilige Bauprodukt verwendet werden soll.

Werden ungeeignete Bauprodukte, also diese technischen Anforderungen nicht oder nicht hinreichend erfüllende Bauprodukte, in einem Gebäudeelement verwendet, kann es zu erheblichen Schäden wie Bränden, Einstürzen eines Gebäudes oder von Gebäudeteilen und / oder zu Personenschäden bis hin zu Todesfällen kommen.

Je nach Art und Umfang der gegebenen technischen Anforderungen kann die Auswahl eines geeigneten Bauprodukts jedoch sehr aufwändig sein. Insbesondere wenn eine Vielzahl von Eigenschaften eines Gebäudeelements, an dem das Bauprodukt verwendet werden soll, zur Definition der technischen Anforderungen zu bestimmen, beispielsweise Eigenschaftswerte zu messen, sind, können sich Fehler und infolge von diesen eine fehlerhafte Auswahl ergeben.

Aufgabe der vorliegenden Erfindung ist es daher, ein Verfahren und eine Vorrichtung anzubieten, die eine kostengünstige und fehlerarme Auswahl geeigneter Bauprodukte ermöglichen, sodass Gebäude besonders sicher gestaltet und errichtet werden können.

Gelöst wird die Aufgabe durch eine **Methode,** um ein Bauprodukt zur Verwendung an einem Gebäudeelement auszuwählen.

Die Methode umfasst mindestens die Operationen Aufnehmen von Bilddaten des Gebäudeelements, Ermitteln wenigstens eines Eigenschaftswertes einer Eigenschaft des Gebäudeelements durch Verarbeiten der Bilddaten mit Hilfe einer Bildverarbeitungseinheit und Auswahl eines Bauprodukts aus einem Satz von Bauprodukten, wobei das Bauprodukt konform zu dem ermittelten Eigenschaftswert der Eigenschaft des Gebäudeelements ist.

Somit kann die Auswahl getroffen werden, ohne dass ein Benutzer den Eigenschaftswert der Eigenschaft bestimmen braucht. Der zugehörige Arbeitsaufwand kann sich somit reduzieren. Das Risiko von Fehlern bei der Bestimmung der Eigenschaft kann minimiert oder gar ausgeschlossen werden.

Die Auswahl kann somit besonders fehlerarm erfolgen. Werden auf diese Weise ausgewählte Bauprodukte an den Gebäudeelementen verwendet, können die auf diese Weise erstellten Gebäude mit hoher Wahrscheinlichkeit die an sie zu stellenden technischen Anforderungen, beispielsweise aufgrund bestehender Vorschriften, ordnungsgemäß erfüllen. Die eingangs genannten Risiken von Schäden sowie weitere schädliche Risiken können gemindert oder vermieden werden. Die erstellten Gebäude können somit sicherer sein.

Das Aufnehmen von Bilddaten kann auch nur einen Teil des Gebäudeelements umfassen. Beispielsweise kann es zweckmäßig sein, Detailansichten als Bilddaten aufzunehmen.

Beispielsweise kann eine Materialart mit höherer Treffsicherheit mit Hilfe der Bildverarbeitungseinheit ermittelbar sein, wenn eine Oberflächenstruktur des Gebäudeelements in einer Detailansicht und dadurch mit hoher Auflösung in den Bilddaten abgebildet ist.

Das Bauprodukt kann als konform zu dem ermittelten Eigenschaftswert der Eigenschaft des Gebäudeelements angesehen werden, wenn das Bauprodukt bei derartigen Gebäudeelementen, die den ermittelten Eigenschaftswert der Eigenschaft aufweisen, verwendbar ist. Ein konformes Bauprodukt kann somit zumindest im Hinblick auf die Eigenschaft, für die der Eigenschaftswert ermittelt worden ist, für das Gebäudeelement geeignet sein.

Denkbar ist, dass mehrere Bauprodukte, die konform mit dem Eigenschaftswert der Eigenschaft sind, im Rahmen der Methode ausgewählt werden.

Oftmals werden die technischen Anforderungen auf mehr als einer einzigen Eigenschaft des Gebäudeelements beruhen. Daher ist es auch denkbar, mehrere Eigenschaftswerte von mehreren Eigenschaften zu ermitteln. Das ausgewählte Bauprodukt kann zu mehreren, insbesondere zu allen, dieser mehreren Eigenschaftswerte konform sein.

Fehlerbehaftete Auswahlen von Bauprodukten können sich bei Kategorien von Bauprodukten, die zur Absicherung gegen bestimmte Gefahren ausgebildet sind, naturgemäß besonders negativ auswirken.

Bauprodukte aus solchen Kategorien können daher besonders vorteilhaft im Rahmen der Methode ausgewählt werden.

Denkbar ist daher insbesondere, dass das auszuwählende Bauprodukt aus wenigstens einer der Kategorien Brandschutzprodukte, Schalldämmprodukte, Wärmedämmprodukte, Befestigungsprodukte, beispielsweise mechanische und / oder chemische Anker, beispielsweise Dübel, stammt und / oder das Universum, insbesondere ausschließlich, Bauprodukte wenigstens eine dieser Kategorien, insbesondere genau eine dieser Kategorien, enthält.

Dabei kann Brandschutzprodukt auch ein Brand-hemmendes Produkt umfassen. Bei einer fehlerbehafteten Auswahl eines Brand-hemmenden Produkts kann beispielsweise eine für eine Evakuierung von Personen erforderliche Feuerwiderstandsklasse, beispielsweise nach DIN EN 13501-2, beispielsweise 30, 60, 90, 120 oder 180 Minuten, unter Umständen nicht gewährleistet werden, sodass es auch bei dieser Kategorie von Bauprodukten durch die fehlerbehaftete Auswahl zu Todesfällen kommen könnte.

Befestigungsprodukte sind aus Sicherheitsgründen oftmals äußerst spezifisch auf definierte Anwendungsfälle abgestimmt. Außerhalb dieser definierten Anwendungsfälle können die Befestigungsprodukte häufig nicht die von ihnen erwartete Leistung, beispielsweise eine bestimmte Mindest-Auszugskraft, bereitstellen, sodass sich auch bei dieser Kategorie von Bauprodukten bei einer fehlerbehafteten Auswahl besondere Sicherheitsrisiken, insbesondere Einsturzgefahren, ergeben können.

Unter einem Bauprodukt kann auch eine Kombination mehrerer Einzelprodukte verstanden werden. Das Bauprodukt kann somit auch ein Bauproduktsystem sein. Beispielsweise kann unter einem Bauprodukt zum Brandschutz, also ein Brandschutzprodukt, auch ein Set aus mehreren Einzelprodukten, beispielsweise mehrere Brandschutzblöcke sowie eine Brandschutz-Dichtmasse zur Versiegelung von Ritzen, verstanden werden. Analog kann ein Bauprodukt aus der Klasse der Befestigungsprodukte mehrere Einzelprodukte umfassen. Im Falle eines chemischen Ankers kann beispielsweise das auszuwählende Bauprodukt auch ein Set aus einem Klebstoff, einer Hülse zur Sammlung des Klebstoffs und eine zum Klebstoff und der Hülse passende Ankerstange sein. Analoges kann auch für die anderen der oben genannten Kategorien gelten.

Das Gebäudeelement kann auch mehrere Einzelelemente umfassen. Beispielsweise kann es sich bei dem Gebäudeelement um eine Durchgangsöffnung handeln, durch die mehrere Leitungen geführt sind. Es soll nun ein Bauprodukt ausgewählt werden, mit dem die Durchgangsöffnung

Zur weiteren Absicherung der Auswahl kann vorgesehen sein, dass der ermittelte Eigenschaftswert einem Benutzer bereitgestellt wird und der Benutzer den Eigenschaftswert bestätigen, verwerfen und / oder anpassen kann. Nach einem Verwerfen können erneut Bilddaten aufgenommen werden und / oder der Eigenschaftswert neu bestimmt werden. Der Benutzer kann den ihm bereitgestellten Eigenschaftswert auch ändern, beispielsweise durch eine Benutzereingabe auf einer Eingabeeinheit wie beispielsweise einer Tastatur, einem Touchscreen oder einem Mikrofon, insbesondere unter Nutzung von Spracherkennung.

Auch eine Bestätigung kann durch eine Benutzereingabe auf der Eingabeeinheit erfolgen.

Ein besonders präziser Soll-/Ist-Vergleich in Bezug auf den ermittelten Eigenschaftswert lässt sich erreichen, wenn der Eigenschaftswert mit Hilfe eines Überlagerungsbildes dem Benutzer bereitgestellt wird. Unter einem Überlagerungsbild kann ein auch als "Augmented Reality" ("AR") bezeichnete Bilddarstellung verstanden werden, in der die aufgenommenen Bilddaten, entweder unverarbeitet oder geeignet vorverarbeitet, von weiteren berechneten Bilddaten überlagert sind.

Betrifft beispielsweise die Eigenschaft des Gebäudeelements eine Größe einer Durchgangsöffnung, so ist beispielsweise denkbar, eine mit Hilfe der Bildverarbeitungseinheit erkannte, im Querschnitt rechteckige Durchgangsöffnung als teiltransparente Fläche an der entsprechenden Stelle den aufgenommenen Bilddaten zu überlagern. Der Benutzer kann dann mit hoher Präzision und auf einfache, ergonomischer Weise prüfen, inwieweit die teiltransparente Fläche der tatsächlichen Erstreckung der Durchgangsöffnung, und damit auch ihrer Größe, entspricht. Betrifft die Eigenschaft eine Materialart, kann eine Abbildung einer typischen Oberflächenstruktur entsprechend der ermittelten Materialart auf oder neben einen Bereich, in dem das Gebäudeelement abgebildet ist, eingeblendet sein, sodass der Benutzer auf einfache Weise die Oberflächenstruktur der ermittelten Materialart und damit die ermittelte Materialart mit der tatsächlichen Materialart des Gebäudeelements vergleichen.

Handelt es sich bei der Eigenschaft um Abmessungen, beispielsweise Länge und / oder Durchmesser, einer Leitung oder eines Rohres, so kann ein Zylinder entsprechend der ermittelten Länge und / oder entsprechend dem ermittelten Durchmesser teiltransparent über die zugehörige Leitung oder das zugehörige Rohr gelegt werden, sodass der Benutzer wiederum auf einfache, ergonomische und zudem präzise Weise die ermittelten Abmessungen mit den tatsächlichen Abmessungen vergleichen kann.

Es kann besonders zweckmäßig sein, dass dreidimensionale Bilddaten als Bilddaten aufgenommen werden, beispielsweise wenn es sich bei der Eigenschaft um eine Abmessung, eine Form und / oder eine Lage handelt. Viele, insbesondere derartige, Eigenschaften lassen sich aus dreidimensionalen Bilddaten im Vergleich zu zweidimensionalen Bilddaten mit höherer Präzision ermitteln. Die Aufnahme kann beispielsweise mit Hilfe eines LIDAR, eines Flugzeitbasierten ("time of flight"-, "TOF"-) Kamera, einer stereoskopischen Kamera oder dergleichen aufgenommen werden.

Denkbar ist alternativ oder ergänzend, dass Bewegtbilddaten als Bilddaten aufgenommen werden. Die Bewegtbilddaten können wenigstens eine Bildfolge von wenigstens zwei verschiedenen Bildern umfassen. Mit Hilfe solcher Bewegtbilddaten können auf einfache Weise Ansichten aus unterschiedlichen Blickrichtungen und / oder mit unterschiedlichen Beleuchtungsbedingungen aufgenommen werden. Verschattete und / oder von anderen Objekten überdeckte Objekte können somit zumindest auf einem Teil der Bilddaten abgebildet sein. Tiefeninformationen können verbessert ermittelt werden. Die Bildverarbeitungseinheit kann somit den Eigenschaftswert mit verbesserter Genauigkeit bestimmen.

Besonders häufig definieren sich die technischen Anforderungen zumindest teilweise durch Abmessungen und / oder durch eine Form. Insbesondere ist daher denkbar, dass die Eigenschaft eine Abmessung, bspw. eine Länge, Breite, Tiefe und / oder Fläche, ein Füllstatus, eine Form und / oder eine Materialart ist.

Bei Varianten der Methode können mehrere Eigenschaftswerte unterschiedlicher Eigenschaften des Gebäudeelements separat voneinander durch Aufnehmen und Verarbeiten unterschiedlicher Bilddaten ermittelt werden.

Auch dadurch können die Eigenschaften noch präziser ermittelbar sein. So ist denkbar, dass unterschiedliche Arten von Bilddaten, beispielsweise Detailansichten oder Gesamtansichten, zur Bestimmung unterschiedlicher Eigenschaften unterschiedlich gut geeignet sind. Daher kann es besonders zweckmäßig sein, Eigenschaftswerte dieser Eigenschaften unabhängig voneinander und bevorzugt anhand unterschiedlicher Bilddaten zu ermitteln.

Beispielsweise können als Eigenschaften eine Materialart des Gebäudeelements, eine Querschnittsfläche einer Durchgangsöffnung in dem Gebäudeelement, sowie Anzahlen, Lagen und Abmessungen von durch die Durchgangsöffnung hindurch verlaufenden Rohren zu bestimmen sein. Dazu können unterschiedliche Bilddaten unterschiedlicher Ansichten, Blickwinkel und Größen des Gebäudeelements einschließlich der Durchgangsöffnung aufgenommen werden. Die Bilddaten können jeweils angepasst an eine jeweilige zu bestimmende Eigenschaft angepasst sein. So kann beispielsweise zur Bestimmung der Materialart eine Nahaufnahme eines Ausschnitts des Gebäudeelements aufgenommen werden, sodass eine Oberflächenstruktur deutlich erkennbar ist. Anschließend kann zur Bestimmung der Querschnittsfläche der Durchgangsöffnung eine Gesamtansicht eines größeren, die gesamte Durchgangsöffnung umfassenden Bildausschnitts aufgenommen werden. Danach können zur Bestimmung der Anzahlen, Lagen und Abmessungen der Rohre unterschiedliche Ansichten, beispielsweise aus unterschiedlichen Blickwinkeln und beispielsweise in Form von Bewegtbilddaten, aufgenommen werden. So können Fehler aufgrund von Verschattungen, Verdeckungen oder dergleichen minimiert werden.

Dabei kann die Erkennungsgenauigkeit der Bildverarbeitungseinheit verbessert werden, wenn diese separat auf die verschiedenen Eigenschaften hin optimiert wird oder optimiert worden ist. Beispielsweise können so auf die jeweilige Eigenschaft angepasste Trainingsdatensätze für ein Training der Bildverarbeitungseinheit verwendet werden.

Denkbar ist auch, die Bildverarbeitungseinheit mit Hilfe von Eingaben des Benutzers, insbesondere je nachdem, ob oder wie der Benutzer einen Eigenschaftswert bestätigt, verwirft und / oder anpasst, die Bildverarbeitungseinheit bei wiederholten Nutzungen der Methode zu trainieren.

Stehen CAD-Modelldaten zu dem Gebäudeelement zur Verfügung, ist es denkbar, dass wenigstens ein zweiter Eigenschaftswert einer zweiten Eigenschaft des Gebäudeelements und / oder des Bauprodukts aus CAD-Modelldaten ermittelt wird und / oder vom Benutzer abgefragt wird. Der zweite Eigenschaftswert kann sich dabei auf eine Eigenschaft beziehen, die per se nicht oder nur mit geringer Präzision aus Bilddaten des Gebäudeelements ermittelbar ist.

Beispielsweise ist denkbar, aus den CAD-Modelldaten eine erforderliche Mindest-Ausziehkraft im Falle von Befestigungsprodukten, eine erforderliche Feuerwiderstandsklasse im Falle von Brandschutzprodukten, eine Abmessung des Gebäudeelements, insbesondere im Falle, dass diese Abmessung im Zustand des Gebäudeelements zum Zeitpunkt der Aufnahme der Bilddaten noch nicht erkennbar ist, eine Anzahl von beispielsweise Rohren, Kabeln und / oder Leitungen, insbesondere im Falle, dass diese Rohre, Kabel und / oder Leitungen zum Zeitpunkt der Aufnahme der Bilddaten noch nicht oder nicht vollständig vorhanden sind, zu bestimmen.

Zu Dokumentations- und / oder zu Qualitätssicherungszwecken kann vorgesehen sein, dass der ermittelte Eigenschaftswert der Eigenschaft des Gebäudeelements und / oder das ausgewählte Bauprodukt abrufbar abgespeichert werden. So können zu einem späteren Zeitpunkt etwaige Abweichungen festgestellt und vorzugsweise gegebenenfalls korrigiert werden.

Das Aufnehmen von Bilddaten des Gebäudeelements, das Ermitteln wenigstens eines Eigenschaftswertes einer Eigenschaft des Gebäudeelements durch Verarbeiten der Bilddaten mit Hilfe einer Bildverarbeitungseinheit und / oder die Auswahl eines Bauprodukts aus einem Satz von Bauprodukten können mit Hilfe eines tragbaren Rechners, beispielsweise ein Smartphone oder ein Laptop, erfolgen.

Die Erfindung betrifft des Weiteren einen tragbaren **Rechner,** umfassend einen Speicher, einen Prozessor, eine Bildaufnahmeeinheit, eine Ausgabeeinheit sowie einen in dem Speicher abrufbar abgelegten Programmcode, der auf dem Prozessor ausführbar ist, wobei der Programmcode eingerichtet ist, wenn er auf dem Prozessor ausgeführt wird, die Methode nach einem der vorangehenden Ansprüchen auszuführen.

Der Rechner ist tragbar, sodass er auf einfache Weise direkt zu einem zu analysierenden Gebäudeelement gebracht werden kann. Um tragbar zu sein, kann er höchstens als 4 kg, bevorzugt höchstens 1 kg, beispielsweise weniger als 0,5 kg wiegen.

Der Rechner kann eine Bildaufnahmeeinheit aufweisen. Die Bildaufnahmeeinheit kann eingerichtet sein, zweidimensionale und / oder dreidimensionale Bilddaten aufzunehmen. Sie kann auch eingerichtet sein, Bewegtbilddaten, insbesondere zweidimensionale und / oder dreidimensionale Bewegtbilddaten, aufzunehmen. Die Bildaufnahmeeinheit kann dazu wenigstens eine optische Kamera umfassen. Sie kann wenigstens einen LIDAR und / oder wenigstens eine Flugzeit-basierte Kamera umfassen.

Der Rechner kann eine Bildverarbeitungseinheit aufweisen. Die Bildverarbeitungseinheit kann zumindest teilweise als Teil des Programmcodes auf dem Rechner implementiert sein. Sie kann auch einen separaten Prozessor, beispielsweise einen Tensorprozessor, einen Grafikprozessor und / oder einen Vektorprozessor, umfassen. Insbesondere kann die Bildverarbeitungseinheit einen Maschinenlerner aufweisen. Auch der Maschinenlerner kann zumindest teilweise als Teil des Programmcodes implementiert sein.

Ein Teil des Rechners kann als Teil einer Cloud-Rechnereinheit ausgebildet sein.

Zur Bereitstellung des ermittelten Eigenschaftswertes kann der Rechner eine Displayeinheit aufweisen. Zur Eingabe von Benutzereingaben kann der Rechner eine Eingabeeinheit aufweisen. Die Eingabeeinheit kann eine Tastatur, eine Computermaus, ein Grafiktablett, einen Bewegungssensor, ein Mikrofon, insbesondere in Kombination mit einer Spracherkennungseinheit, einen Touchscreen und / oder eine Virtual-Reality- oder eine Augmented-Reality-Brille umfassen. Die Virtual-Reality- oder die Augmented-Reality-Brille können zudem auch als Displayeinheit vorgesehen sein.

Die Bildverarbeitungseinheit kann zur semantischen Segmentierung, beispielsweise um unterschiedliche Materialarten und / oder das Vorhandensein und gegebenenfalls die Position und / oder Lage von Öffnungen zu erkennen, eingerichtet sein. Sie kann auch eingerichtet sein, einen SLAM (simultaneous localization and mapping)-Algorithmus zu implementieren. Die Bildverarbeitungseinheit kann eingerichtet sein, den SLAM-Algorithmus beispielsweise zur Bestimmung von Eigenschaftswerten von Abmessungen betreffenden Eigenschaften zu verwenden.

Die hier beschriebenen Methoden, Prozesse und/oder Operationen können durch Programmcode oder Anweisungen ausgeführt werden, die von einem Rechner, einem Prozessor, einem Steuergerät oder einem anderen Signalverarbeitungsgerät ausgeführt werden. Der Rechner, der Prozessor, das Steuergerät oder ein anderes Signalverarbeitungsgerät können die hier beschriebenen sein oder zusätzlich zu den hier beschriebenen Elementen eingesetzt werden. Da die Algorithmen, die den Methoden (oder Operationen des Rechners, Prozessors, Controllers oder einer anderen Signalverarbeitungsvorrichtung) zugrunde liegen, im Detail beschrieben sind, können der Code oder die Anweisungen zur Implementierung der Operationen der Verfahrensausführungen den oder das Rechner, Prozessor, Steuergerät oder eine andere Signalverarbeitungsvorrichtung in einen Spezialprozessor zur Durchführung der hier beschriebenen Methoden verwandeln.

Eine andere Ausführungsform kann auch ein computerlesbares Medium, z.B. ein nichttransitorisches, computerlesbares Medium, zum Speichern des oben beschriebenen Programmcodes oder der Anweisungen umfassen. Bei dem computerlesbaren Medium kann es sich um einen flüchtigen oder nichtflüchtigen Speicher oder eine andere Speichervorrichtung handeln, die abnehmbar oder fest mit dem Rechner, dem Prozessor, dem Steuergerät oder einer anderen Signalverarbeitungsvorrichtung verbunden sein kann, der/die den Programmcode oder die Anweisungen zur Durchführung der hierin beschriebenen Verfahrensausführungen oder Operationen ausführen soll.

Die Steuergeräte, Prozessoren, Geräte, Module, Einheiten, Multiplexer, Generatoren, Logik, Schnittstellen, Decoder, Treiber und andere signalerzeugende und -verarbeitende Merkmale der hier offengelegten Ausführungsformen können beispielsweise in nicht-transitorischer Logik implementiert werden, die Hardware, Software oder beides umfassen kann. Wenn die Steuergeräte, Prozessoren, Geräte, Module, Einheiten, Multiplexer, Generatoren, Logik, Schnittstellen, Decoder, Treiber und andere signalerzeugende und -verarbeitende Merkmale zumindest teilweise in Hardware implementiert sind, kann es sich beispielsweise um eine beliebige aus einer Vielzahl integrierter Schaltungen handeln, einschließlich, aber nicht beschränkt auf eine anwendungsspezifische integrierte Schaltung, ein feldprogrammierbares Gate-Array, eine Kombination von Logikgattern, ein System-on-Chip, einen Mikroprozessor oder eine andere Art von Verarbeitungs- oder Steuerschaltung. Der Prozessor kann beispielsweise eine Hardware umfassen, die eine Steuerlogik bildet und/oder umfasst, einen lesbaren und/oder beschreibbaren Speicher, eine Datenschnittstelle, einen im Speicher gespeicherten oder speicherbaren und auf dem Prozessor ausführbaren Programmcode, insbesondere Programmcode zur Steuerung der übrigen Steuerlogik.

Wenn sie zumindest teilweise in Software implementiert sind, können die Steuergeräte, Prozessoren, Geräte, Module, Einheiten, Multiplexer, Generatoren, Logik, Schnittstellen, Decoder, Treiber und andere signalerzeugende und -verarbeitende Merkmale beispielsweise einen Speicher oder eine andere Speichervorrichtung zum Speichern von Programmcode oder Anweisungen enthalten, die beispielsweise von einem Rechner, Prozessor, Mikroprozessor, Controller oder einer anderen signalverarbeitenden Vorrichtung ausgeführt werden sollen. Der Rechner, der Prozessor, der Mikroprozessor, das Steuergerät oder ein anderes Signalverarbeitungsgerät können die hier beschriebenen Elemente sein oder zusätzlich zu den hier beschriebenen Elementen eingesetzt werden. Da die Algorithmen, die die Grundlage der Methoden oder Operationen des Rechners, Prozessors, Mikroprozessors, Steuergeräts oder einer anderen Signalverarbeitungsvorrichtung bilden, im Detail beschrieben sind, kann der Programmcode oder die Anweisungen zur Implementierung der Operationen der Verfahrensausführungen den Rechner, den Prozessor, das Steuergerät oder eine andere Signalverarbeitungsvorrichtung in einen Spezialprozessor zur Durchführung der hier beschriebenen Methoden verwandeln.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- Fig. 1: einen Rechner von einer Vorderseite,
- Fig. 2: den Rechner von seiner Rückseite,
- Fig. 3 bis Fig. 8: anhand von Anzeigeninhalten einer Ausgabeeinheit des Rechners Operationen einer Methode, um ein Bauprodukt zur Verwendung an einem Gebäudeelement auszuwählen, und
- Fig. 9: ein Überlagerungsbild eines weiteren Gebäudeelements mit ermittelten Eigenschaftswerten.

In der nachfolgenden Beschreibung der Figuren werden zur Erleichterung des Verständnisses der Erfindung für gleiche oder sich funktional entsprechende Elemente jeweils die gleichen Bezugszeichen verwendet.

Die Methode und der tragbare Rechner werden im Folgenden anhand eines Beispiels näher erläutert, bei dem angenommen wird, dass ein Benutzer der Methode ein Brandschutzprodukt auswählt, um eine bestimmte Durchgangsöffnung, durch die Leitungen, Kabel, Rohre, Kabelschienen oder dergleichen geführt sein können, bzw. ein die Durchgangsöffnung aufweisendes Gebäudeelement gemäß einschlägiger Brandschutzvorschriften und sonstiger technischer Anforderungen mit einem geeigneten Brandschutzprodukt auszustatten.

Dazu verwendet der Benutzer einen tragbaren Rechner in Form eines mit entsprechendem Programmcode ausgestatteten Smartphones, das zudem wenigstens einen LIDAR-Scanner aufweist.

Zur Auswahl steht eine Vielzahl von Bauprodukten aus der Klasse der Brandschutzprodukte. Die Bauprodukte sind jeweils für unterschiedliche technische Anforderungen unterschiedlich gut geeignet.

Um eines oder mehrere dieser Bauprodukte auswählen zu können, sollten Eigenschaftswerte mehrerer Eigenschaften des Gebäudeelements ermittelt werden.

Diese zu ermittelnden Eigenschaften können beispielsweise sein:
- das Vorhandensein oder Nichtvorhandensein einer Durchgangsöffnung in dem Gebäudeelement,
- die Form der Durchgangsöffnung,
- einen Status der Durchgangsöffnung, insbesondere, ob oder inwieweit die Durchgangsöffnung bereits gefüllt ist,
- eine Materialart des Gebäudeelements,
- Dicke des Gebäudeelements oder Tiefe der Durchgangsöffnung,
- Anzahl durch die Durchgangsöffnung hindurch reichender Leitungselemente wie beispielsweise Kabel, Rohre, Leitungen usw.,
- sofern derartige Leitungselemente vorhanden oder vorgesehen sind, deren Arten, deren Materialien, Formen und Abmessungen sowie deren Positionen und Lagen,
- gegebenenfalls Arten bereits vorhandener Dämmungen,
sowie gegebenenfalls
- eine anzustrebende Feuerwiderstandsklasse.

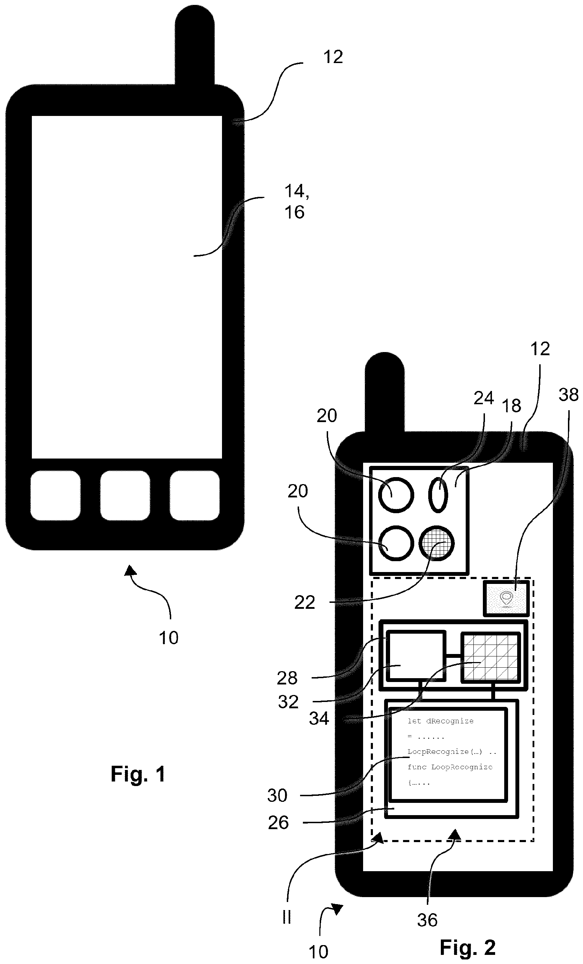

**Fig. 1** zeigt einen tragbaren Rechner **10** von einer Vorderseite.

Der Rechner 10 ist als Smartphone ausgebildet. Auf seiner Vorderseite weist er eine Eingabeeinheit **14** in Form eines Touchscreens auf. Die Eingabeeinheit ist somit auch in der Lage, Bilddaten an einen Benutzer des Rechners 10 auszugeben und bildet damit auch eine Ausgabeeinheit **16** .

**Fig. 2** zeigt den Rechner 10 von einer Rückseite. Fig. 2 ist in einer teilweise geöffneten Darstellung abgebildet, sodass in einem Ausschnitt **II** innerhalb eines Gehäuses **12** liegende elektronische Komponenten erkennen kann.

Der Rechner 10 weist eine Bildaufnahmeeinheit **18** auf. Die Bildaufnahmeeinheit 18 weist zwei optische zweidimensional aufnehmende Kameras **20** sowie eine Flugzeit-basierte Kamera **22** auf. Die zweidimensional aufnehmenden Kameras 20 sind eingerichtet, zweidimensionale Bilddaten in Farbe aufzunehmen. Die Flugzeit-basierte Kamera 22 ist eingerichtet, dreidimensionale Bilddaten aufzunehmen. Um eine ausreichende Ausleuchtung sicherzustellen, weist die Bildaufnahmeeinheit 18 ferner eine Lichtquelle **24** in Form einer Weißlicht-LED auf. Sowohl die zweidimensional aufnehmenden Kameras 20 als auch die Flugzeit-basierte Kamera 22 sind eingerichtet, neben Einzelaufnahmen auch Bewegtbilddaten aufzunehmen.

Wie in dem Ausschnitt II aus Fig. 2 zu erkennen, weist der Rechner 10 zudem einen Speicher **26,** einen Prozessor **28** sowie einen in dem Speicher abrufbar abgelegten und auf dem Prozessor 28 ausführbaren Programmcode **30** auf.

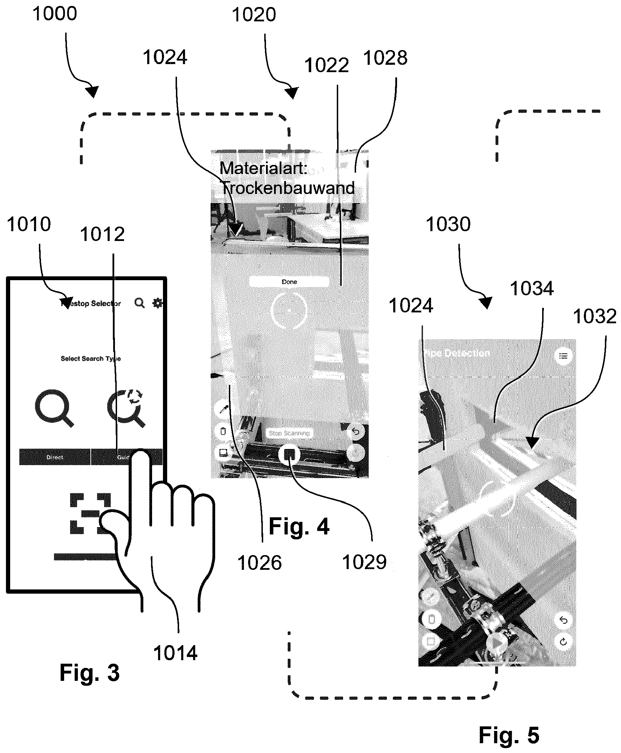

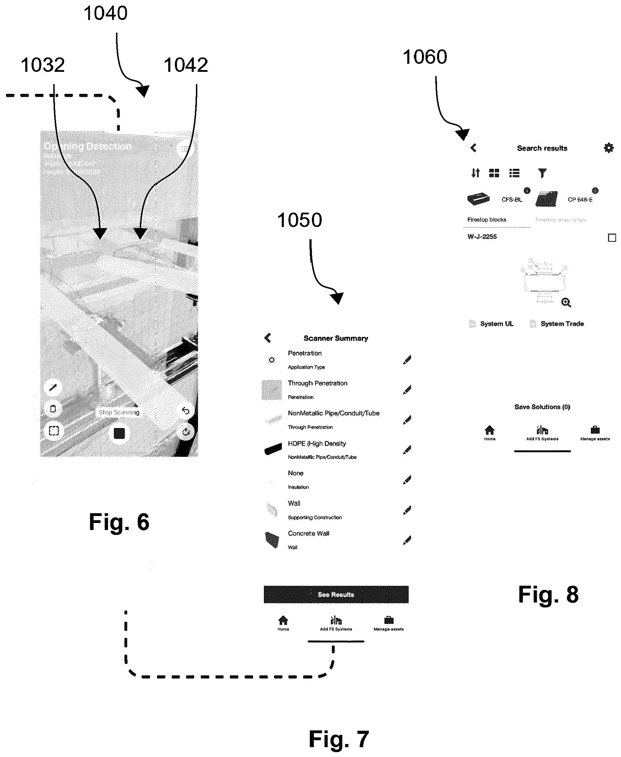

Der Rechner 10 ist eingerichtet, bei Ausführung des Programmcodes 30 auf dem Prozessor 28 eine nachfolgend anhand von Fig. 3 bis Fig. 8 näher erläuterte Methode **1000** (siehe Fig. 3) auszuführen.

Der Prozessor 28 weist einen linearen Prozessor **32** und einen Maschinenlerner **34** auf. Der Maschinenlerner 34 umfasst einen Tensorprozessor, mit dessen Hilfe eine trainierbare neuronale Netzwerkstruktur implementiert ist.

Mit Hilfe der im Ausschnitt II abgebildeten Elemente und insbesondere mit Hilfe des Maschinenlerners 34 ist eine Bildverarbeitungseinheit **36** ausgebildet. Die Bildverarbeitungseinheit 36 ist eingerichtet, von den Kameras 20, 22 stammende Bilddaten zu verarbeiten und daraus Eigenschaftswerte unterschiedlicher Eigenschaften, entsprechend dem Bedarf des jeweiligen Ausführungsbeispiels der Methode 1000, wie beispielsweise nachfolgend näher erläutert, zu ermitteln.

Der Rechner 10 kann auch eine Posendetektionseinheit **38** aufweisen. Die Posendetektionseinheit 38 kann eingerichtet sein, eine Position und / oder eine Lage des Rechners 10 zu bestimmen. Die Posendetektionseinheit 38 kann dazu einen Beschleunigungsmesser, beispielsweise in Form eines IMU (Inertial Measuring Unit), aufweisen. Sie kann auch ein Funk-basiertes und / oder ein Satelliten-gestütztes Ortungssystem, beispielsweise ein GPS- und / oder ein GLONASS-System, aufweisen.

**Fig. 3** bis **Fig. 8** beschreiben die Methode 1000 näher. Die Methode 1000 dient dazu, ein Bauprodukt, dem dieser Beschreibung zugrunde gelegten Beispiel also ein Brandschutzprodukt, aus einer Vielzahl von Brandschutzprodukten auszuwählen. Im vorliegend beschriebenen Ausführungsbeispiel wird ein Benutzer des Rechners 10 (siehe Fig. 1) mit Hilfe des Programmcodes 30 (siehe Fig. 2) und diversen Ausgaben auf der Ausgabeeinheit 16 (siehe ebenfalls Fig. 1) des Rechners 10 derart geführt, dass insgesamt alle zur Methode 1000 gehörige Operationen ausgeführt werden.

Fig. 3 bis Fig. 8 stellen dazu Anzeigeinhalte der Ausgabeeinheit 16 zu den verschiedenen Operationen der Methode 1000, vorzugsweise in der Reihenfolge des Auftretens beziehungsweise der Durchführung der Operationen, dar. Die dargestellten Anzeigeinhalte sind rein beispielhaft und im vorliegenden Ausführungsbeispiel durch den Programmcode 30 (Fig. 2) erzeugt.

In einer Operation **1010** (siehe Fig. 3) kann ein Benutzer **1014,** von dem aus Vereinfachungsgründen in Fig. 3 lediglich eine Hand abgebildet ist, durch Anklicken eines Start-Schaltfeldes **1012** eine geführte Auswahl eines Bauprodukts starten.

Im Ausführungsbeispiel ist vorgesehen, mehrfach Bilddaten eines Gebäudeelements, insbesondere in Form von Detailansichten, aufzunehmen und daraus jeweils wenigstens einen Eigenschaftswerts einer Eigenschaft des Gebäudeelements durch Verarbeiten der aufgenommenen Bilddaten mit Hilfe der Bildverarbeitungseinheit 36 (Fig. 2) zu ermitteln. Anhand der so ermittelten Eigenschaftswerte kann dann ein geeignetes Bauprodukt ausgewählt werden.

In einer Operation **1020** (siehe Fig. 4) wird zunächst als eine Eigenschaft eine Materialart eines Gebäudeelements **1022** bestimmt. Dazu werden mit Hilfe der Kameras 20, 22 (siehe Fig. 2) Bilddaten des Gebäudeelements 1022 derart aufgenommen, dass dessen Oberflächenstruktur möglichst präzise abgebildet ist. Dem Benutzer 1014 wird auf der Ausgabeeinheit 16 (siehe Fig. 1) laufend ein Überlagerungsbild **1024** mit den aufgenommenen Bilddaten, einer Markierung eines vorrangig analysierten Bereichs **1026,** in Fig. 4 in teiltransparenter Darstellung abgebildet, und einem ermittelten Eigenschaftswert **1028,** im Beispiel "Trockenbauwand". Die Aufnahme von Bilddaten sowie die Ermittlung des Eigenschaftswertes 1028 werden kontinuierlich wiederholt, bis der Benutzer 1014 auf einen Bestätigungs-Schaltfeld **1029** klickt und damit den aktuell ermittelten Eigenschaftswert 1028 bestätigt und damit zur nächsten Operation gelangt.

Bei der in Fig. 5 dargestellten nächsten Operation **1030** werden nacheinander Eigenschaftswerte von Eigenschaften von durch eine Durchgangsöffnung **1032** hindurch reichenden Rohre, von denen beispielhaft ein Rohr **1034** in Fig. 5 markiert ist, Leitungen, Kabel oder dergleichen ermittelt. Insbesondere werden für jedes solcher Elemente Anzahl, Größe, Position und eine Lage des Elements, also seine Ausrichtung, sowie eine Materialart, beispielsweise Metall versus Kunststoff und / oder schwer versus leicht entflammbar, wiederum durch Aufnehmen von Bilddaten mit Hilfe der Kameras 20, 22 und durch Verarbeiten durch die Bildverarbeitungseinheit 36 ermittelt. Es wird ein Überlagerungsbild **1024** dem Benutzer 1014 präsentiert, in dem beispielhaft die aufgenommen Bilddaten eines erkannten Rohres **1038** entsprechend der zugehörigen ermittelten Eigenschaftswerte überlagert dargestellt ist. Auch bei dieser Operation 1030 wiederholt sich der Erkennungsprozess kontinuierlich, bis der Benutzer 1014 durch Anklicken eines Schaltfeldes bestätigt und zu einer nächsten Operation gelangt.

In Analogie zur Operation 1030 wird in einer Operation **1040** die Durchgangsöffnung 1032 identifiziert und von dieser mehrere Eigenschaftswerte mehrerer Eigenschaften, insbesondere ihrer Form, beispielsweise rechteckig oder elliptisch, und ihre Abmessungen, im vorliegenden Falle einer rechteckigen Durchgangsöffnung eine Länge, eine Breite und eine Tiefe, ermittelt.

Zur Ermittlung dieser Eigenschaftswerte werden insbesondere Bewegtbilddaten aufgezeichnet, während der Benutzer 1014 den Rechner 10, also das Smartphone, bewegt. Somit können auch Bereiche der Durchgangsöffnung 1032 analysiert werden, die sonst durch ein oder mehrere der Rohre verdeckt wären. Ein Überlagerungsbild wird dem Benutzer 1014 bereitgestellt, in dem die aufgenommen Bilddaten von einer erkannten Durchgangsöffnung **1042** überlagert sind, sodass der Benutzer 1014 wiederum die ermittelten Eigenschaften prüfen und gegebenenfalls bestätigen kann.

In einer Operation **1050** werden alle ermittelten Eigenschaftswerte als Übersicht dem Benutzer 1014 bereitgestellt. Er erhält die Möglichkeit, entweder einzelne Eigenschaftswerte manuell anzupassen, eine oder mehrere der vorherigen Operation 1010, 1020, 1030 oder 1040 erneut auszuführen, oder die ermittelten Eigenschaftswerte zu bestätigen und zur nächsten Operation weiter zu gelangen.

In einer Operation **1060** ruft der Rechner 10, insbesondere mit Hilfe des entsprechend eingerichteten Programmcodes 30, aus einer Bauprodukte-Datenbank, in der eine Vielzahl von Brandschutzprodukten mit ihren zulässigen Eigenschaftswerten der jeweiligen Eigenschaften abrufbar abgelegt sind, alle Bauprodukte ab, die entsprechend aller der ermittelten Eigenschaftswerte zulässig sind.

Die Liste sich hieraus ergebender geeigneter Bauprodukt, hier also der entsprechenden Brandschutzprodukte, wird dargestellt auf der Ausgabeeinheit 16, wonach der Benutzer 1014 endgültig das gewünschte Bauprodukt durch Anklicken auswählen kann.

Denkbar ist, dass dem Benutzer technische Daten, Zulassungsdaten und / oder dergleichen zu den Bauprodukten bereitgestellt werden.

Denkbar ist auch, dass das gewählte Bauprodukt und / oder die ermittelten Daten in einer internen Datenbank des Rechners 10 oder in einer externen Datenbank für einen späteren Abruf, beispielsweise zu Zwecken der Überwachung oder Qualitätssicherung, wieder abgerufen werden können.

Weiter ist denkbar, dass durch die Auswahl eines geeigneten Bauprodukts ein automatischer Bestellprozess, beispielsweise durch Kommunikation mit einem Cloud-basierten Rechnersystem, ausgelöst wird, sodass das Bauprodukt an die jeweilige Baustelle geliefert wird. Dadurch können Datenübertragungsfehler vermieden werden, sodass das Risiko eines Einbaus eines ungeeigneten Bauprodukts zusätzlich minimiert werden kann.

Weiter ist denkbar, dass ergänzend zur Ermittlung von Eigenschaftswerten der Eigenschaften Daten aus externen Datenquellen bei der Bereitstellung der Liste geeigneter Bauprodukte berücksichtigt werden.

Besteht beispielsweise Zugriff auf ein CAD-Modell, insbesondere auf eines, das BIM- (Building Information Model) Daten des Gebäudeelements 1022 enthält, so ist denkbar, nicht ermittelte oder nicht durch Aufnehmen von Bilddaten ermittelbare Eigenschaftswerte dem CAD-Modell zu entnehmen. Beispielsweise könnte in dem CAD-Modell eine zu erreichende Feuerwiderstandsklasse hinterlegt sein. Es kann auch überprüft werden, ob den aufgenommenen Bilddaten grundsätzlich alle gemäß dem CAD-Modell geplanten Elemente entnehmbar sind. So ist denkbar, dass beispielsweise ein oder mehrere der Rohre, Kabel, Leitungen etc., noch nicht in der Realität verlegt sind. Dann können diese Elemente zumindest mit den Daten, die im CAD-Modell für diese hinterlegt sind, bei der Bereitstellung der Liste geeigneter Bauprodukte berücksichtigt werden. Alternativ oder ergänzend kann auch der Benutzer 1014 darauf hingewiesen werden, dass ein oder mehrere Elemente am Gebäudeelement noch nicht realisiert sein.

Denkbar ist ferner, dass Daten des CAD-Modells bereits bei der Verarbeitung der aufgenommenen Bilddaten verwendet werden, insbesondere um dadurch Ermittlungsgenauigkeiten bei der Ermittlung der Eigenschaftswerte weiter zu verbessern. Wenn sich beispielsweise aus dem CAD-Modell ergibt, dass eine bestimmte Anzahl von zylindrischen Rohren und eine bestimmte Anzahl von im Wesentlichen rechteckigen Kabelrinnen, jeweils an bestimmten Positionen zu erwarten sind, so können bei der Erkennung der Rohre und der Kabelrinnen diese Angaben aus dem CAD-Modell im Sinne von Ausgangshypothesen bei der Verarbeitung der Bilddaten berücksichtigt werden.

Zum Abgleich des CAD-Modells mit den aufgenommen Bilddaten kann der Rechner 10 seine durch die Posendetektionseinheit 38 (siehe Fig. 1) ermittelte Position und / oder Lage verwenden.

Zur Identifikation von beispielsweise Materialarten, beispielsweise im Rahmen der Operationen 1020 oder 1030, kann der Maschinenlerner 34 verwendet werden. Insbesondere kann der Maschinenlerner 34 dazu ein Konvolutions-basiertes, mehrschichtiges Deep-Learning Modell, beispielsweise ein CNN (Convolutional Neural Network) implementieren.

Zum Training des Maschinenlerners 34 beispielsweise zur Erkennung der Materialart des Gebäudeelements bzw. zur Ermittlung des Eigenschaftswertes 1028 haben sich Trainingsdaten im Umfang von mindestens 100 Abbildungen je Materialart, im Ausführungsbeispiel die Materialarten "Trockenbauwand", "Beton" und "Holz", jeweils aufgenommen bei unterschiedlichen Beleuchtungsbedingungen, insbesondere "dunkel", "normal", "hell", bewährt.

Das Training des Maschinenlerners 34 kann auf dem Rechner 10 direkt erfolgen. Bevorzugt erfolgt es jedoch auf einem separaten Rechnersystem, beispielsweise einem Cloud-basierten Rechnersystem.

Zur Identifikation geometrischer Strukturen, insbesondere der Rohre, Kabel, Leitungen etc. sowie der Durchgangsöffnung, kann auch eine algebraische Anpassungsmethode verwendet werden.

Beispielsweise können Rohre als zylinderförmige Objekte oder ähnliche Ellipsen-basierte Objekte, angenähert werden, deren Grunddaten, insbesondere eine Zentralposition, ein Durchmesser sowie eine Lage im Raum, durch algebraische Anpassungsmethoden geschätzt werden. Die Schätzungen für solche Ellipsen-basierte Objekte können dazu beispielsweise auf Basis der Taubin-Methode erfolgen.

Somit ist es denkbar, zur Ermittlung von Eigenschaftswerten von mehreren Eigenschaften sowohl algebraische Anpassungsmethoden als auch den Maschinenlerner 34 zu verwenden.

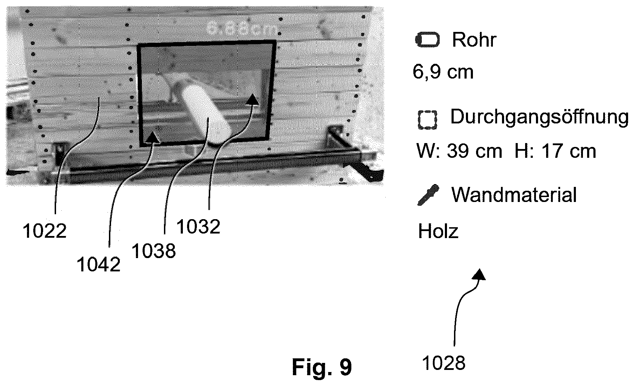

**Fig. 9** zeigt ein Überlagerungsbild eines weiteren Gebäudeelements 1022 mit einer Durchgangsöffnung 1032, einer erkannten Durchgangsöffnung 1042 und einem erkannten Rohr 1034 und die daraus ermittelten Eigenschaftswerte 1028, hier ein Rohrdurchmesser des Rohres 1034 von ca. 7 cm, Abmessungen der Durchgangsöffnung 1032 von ca. 38 cm × 17 cm sowie als Material des Gebäudeelements 1022 "Holz".

Zu erkennen ist, dass die erkannte Durchgangsöffnung 1042 über die tatsächliche Durchgangsöffnung 1032 entsprechend der ermittelten Bilddaten hinausreicht. Dem liegen in diesem Ausführungsbeispiel Daten eines CAD-Modells zugrunde, das eine entsprechend vergrößerte Durchgangsöffnung 1032 vorsieht, das heißt, dass die Durchgangsöffnung durch das Gebäudeelement 1022 noch vergrößert werden wird und daher die auszuwählenden Bauprodukte, hier wiederum ein Brandschutzprodukt, größer zu bemessen sind als aufgrund der aufgenommenen Bilddaten erkennbar ist.

### Bezugszeichenliste

- 10: Rechner
- 12: Gehäuse
- 14: Eingabeeinheit
- 16: Ausgabeeinheit
- 18: Bildaufnahmeeinheit
- 20: Kamera
- 22: Kamera
- 24: Lichtquelle
- 26: Speicher
- 28: Prozessor
- 30: Programmcode
- 32: linearer Prozessor
- 34: Maschinenlerner
- 36: Bildverarbeitungseinheit
- 38: Posendetektionseinheit
- 1000: Methode
- 1010: Operation
- 1012: Schaltfeld
- 1014: Benutzer
- 1020: Operation
- 1022: Gebäudeelement
- 1024: Überlagerungsbild
- 1026: Bereich
- 1028: Eigenschaftswert
- 1029: Schaltfeld
- 1030: Operation
- 1032: Durchgangsöffnung
- 1034: Rohr
- 1038: erkanntes Rohr
- 1040: Operation
- 1042: erkannte Durchgangsöffnung
- 1050: Operation
- 1060: Operation
- II: Ausschnitt

## Patentansprüche

1. **Methode (1000),** um ein Bauprodukt zur Verwendung an einem Gebäudeelement (1022) auszuwählen, umfassend mindestens die Operationen (1010, 1020, 1030, 1040, 1050, 1060):
- Aufnehmen von Bilddaten des Gebäudeelements (1022),
- Ermitteln wenigstens eines Eigenschaftswertes (1028) einer Eigenschaft des Gebäudeelements (1022) durch Verarbeiten der Bilddaten mit Hilfe einer Bildverarbeitungseinheit (36),
- Auswahl eines Bauprodukts aus einem Satz von Bauprodukten, wobei das Bauprodukt konform zu dem ermittelten Eigenschaftswert (1028) der Eigenschaft des Gebäudeelements (1022) ist.

2. Methode nach dem vorangehenden Anspruch, **dadurch gekennzeichnet, dass** das auszuwählende Bauprodukt aus wenigstens einer der Kategorien Brandschutzprodukte, Schallschutzprodukte, Wärmedämmprodukte, Befestigungsprodukte, beispielsweise mechanische und / oder chemische Anker, stammt und / oder das Universum, insbesondere ausschließlich, Bauprodukte wenigstens einer dieser Kategorien, insbesondere aus genau eine dieser Kategorien, enthält.

3. Methode nach einem der vorangehenden Ansprüche, **dadurch gekennzeichnet, dass** der ermittelte Eigenschaftswert (1028) einem Benutzer (1014) bereitgestellt wird und der Benutzer (1014) den Eigenschaftswert (1028) bestätigen, verwerfen und / oder anpassen kann.

4. Methode nach einem der vorangehenden Ansprüche, **dadurch gekennzeichnet, dass** der Eigenschaftswert (1028) mit Hilfe eines Überlagerungsbildes (1024) dem Benutzer (1014) bereitgestellt wird.

5. Methode nach einem der vorangehenden Ansprüche, **dadurch gekennzeichnet, dass** dreidimensionale Bilddaten als Bilddaten aufgenommen werden.

6. Methode nach einem der vorangehenden Ansprüche, **dadurch gekennzeichnet, dass** Bewegtbilddaten als Bilddaten aufgenommen werden.

7. Methode nach einem der vorangehenden Ansprüche, **dadurch gekennzeichnet, dass** die Eigenschaft wenigstens eine Abmessung, beispielsweise eine Länge, Breite, Tiefe und / oder Fläche, ein Füllstatus, eine Form und / oder eine Materialart ist.

8. Methode nach einem der vorangehenden Ansprüche, **dadurch gekennzeichnet, dass** separat voneinander mehrere Eigenschaftswerte (1028) unterschiedlicher Eigenschaften des Gebäudeelements (1022) durch Aufnehmen und Verarbeiten unterschiedlicher Bilddaten ermittelt werden.

9. Methode nach einem der vorangehenden Ansprüche, **dadurch gekennzeichnet, dass** wenigstens ein zweiter Eigenschaftswert (1028) einer zweiten Eigenschaft des Gebäudeelements (1022) und / oder des Bauprodukts aus CAD-Modelldaten ermittelt wird und / oder vom Benutzer (1014) abgefragt wird.

10. Methode nach einem der vorangehenden Ansprüche, **dadurch gekennzeichnet, dass** der ermittelte Eigenschaftswert (1028) der Eigenschaft des Gebäudeelements (1022) und / oder das ermittelte Bauprodukt abrufbar abgespeichert werden.

11. Methode nach einem der vorangehenden Ansprüche, **dadurch gekennzeichnet, dass** das Aufnehmen von Bilddaten des Gebäudeelements (1022), das Ermitteln wenigstens eines Eigenschaftswertes (1028) einer Eigenschaft des Gebäudeelements (1022) durch Verarbeiten der Bilddaten mit Hilfe einer Bildverarbeitungseinheit (36) und / oder die Auswahl eines Bauprodukts aus einem Satz von Bauprodukten, mit Hilfe eines tragbaren Rechners (10), beispielsweise ein Smartphone oder ein Laptop, erfolgt.

12. **Tragbarer Rechner (10),** umfassend einen Speicher (26), einen Prozessor (28), eine Bildaufnahmeeinheit (18), eine Ausgabeeinheit (16) sowie einen in dem Speicher (26) abrufbar abgelegten Programmcode (30), der auf dem Prozessor (28) ausführbar ist, wobei der Rechner (10) eingerichtet ist, bei Ausführung des Programmcodes (30) auf dem Prozessor (28) die Methode (1000) nach einem der vorangehenden Ansprüchen auszuführen.
